Europäisches Patentamt

European Patent Office

Office européen des brevets

(11) Veröffentlichungsnummer: **0 298 199**
**A2**

(12) **EUROPÄISCHE PATENTANMELDUNG**

(21) Anmeldenummer: **88104210.5**

(22) Anmeldetag: **17.03.88**

(51) Int. Cl.⁴: **B64D  11/00**

(30) Priorität: **12.05.87 DE 3715759**

(43) Veröffentlichungstag der Anmeldung:
**11.01.89 Patentblatt  89/02**

(84) Benannte Vertragsstaaten:
**FR GB IT NL SE**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Kohler, Karl
Ansorgestrasse 29
D-2000 Hamburg 52(DE)**
Erfinder: **Von Reith, Dirk
Lohbekstieg 24
D-2000 Hamburg 54(DE)**

(54) **Anordnung zur Wasserversorgung, insbesondere an Bord eines flugzeuges.**

(57) Um eine Anordnung zur Wasserversorgung, insbesondere an Bord eines Flugzeuges, die entsprechende Wasserentnahmestellen sowie eine Trinkwasser- und einen Abwassertank aufweist, derart auszubilden, daß diese ohne zusätzliche Trinkwasserzuladung eine beispielsweise zum Duschen an Bord ausreichende Wassermenge liefert, besteht die Erfindung bei einer derartigen Anordnung darin, daß der Abwassertank 12 mit einer Einrichtung 13 zur Aufbereitung des Abwassers in an sich bekannter Weise in Verbindung steht, die aufbereitetes Wasser in einen Vorratstank 8 liefert, wobei mindestens einige der Entnahmestellen 1,2,3,4 derart mit dem Vorratstank 8 und dem Abwassertank 12 verbunden sind, daß die aufbereitetes Wasser führenden Leitungen 10,14,16 mit den Abwasser führenden Leitungen 11 im Prinzip einen Kreislauf bilden.

Hieraus ergeben sich erhebliche Gewichtsvorteile gegenüber bisherigen Lösungen.

Fig. 1

## Anordnung zur Wasserversorgung, insbesondere an Bord eines Flugzeuges

Die Erfindung bezieht sich auf eine Anordnung nach dem Oberbegriff des Anspruchs 1.

Bekannte Anordnungen dieser Art bestehen im wesentlichen aus einem der Versorgung der angeschlossenen Entnahmestellen dienenden Trinkwassertank sowie einem Tank für das anfallende Abwasser und einem System von entsprechenden Leitungen, wobei die Förderung des Wassers mittels Pumpen geschieht. Etwa 66% des ursprünglich mitgeführten Trinkwassers entfallen auf Bordküchen und Waschräume, deren Abwässer direkt nach außen abgeführt werden. Der vorgenannte Abwassertank dient lediglich zur Aufnahme der 34%, die die Toiletten als Spülwasser durchlaufen haben. Bei einer derartigen Wasserversorgung ist es allerdings nicht möglich, einen größeren Wasserbedarf, z.B. zum Duschen an Bord zu decken, ohne die beim Start mitzuführende, wirtschaftlich vertretbare Wasserzuladung deutlich zu überschreiten.

Demgemäß liegt der Erfindung die Aufgabe zugrunde, eine gattungsgemäße Anordnung derart auszubilden, daß diese ohne zusätzliche Trinkwasserzuladung eine beispielsweise zum Duschen an Bord ausreichende Wassermenge liefert, wobei die Qualität des Wassers den einschlägigen Vorschriften entspricht.

Diese Aufgabe ist bei einer gattungsgemäßen Anordnung durch die kennzeichnenden Merkmale des Patentanspruchs 1 gelöst. Vorteilhafte Weiterbildungen der Erfindung sind in den Unteransprüchen angegeben.

Die Erfindung ist anhand der Zeichnung dargestellt und in der Beispielbeschreibung näher erläutert. Es zeigen

Fig.1 Eine schematische Darstellung einer Anordnung zur Wasserversorgung in einem Flugzeug und

Fig.2 Eine schematische Darstellung einer Einrichtung zur -Wasseraufbereitung.

Aufgrund der Erfindung ist vorgesehen, daß das anfallende Abwasser in an sich bekannter Weise derart aufbereitet wird, daß es mindestens wieder als sogenanntes Brauchwasser verwendbar ist.

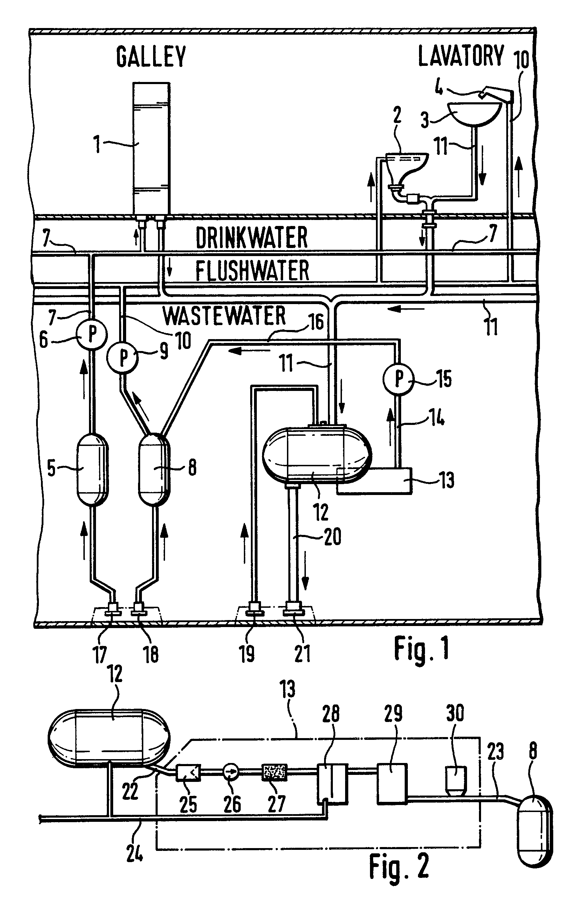

Demgemäß zeigt Fig. 1 eine Anordnung zur Wasserversorgung an Bord eines Flugzeuges wodurch eine Bordküche 1, sowie ein Waschraum mit einer Toilette 2 und einem Waschbecken 3 mit einem Wasserhahn 4 mit Wasser versorgt werden. Die Anordnung weist weiterhin einen Trinkwassertank 5 auf, der über eine Pumpe 6 mit einer Trinkwasserleitung 7 in Verbindung steht. In entsprechender Weise steht ein Tank 8 für aufbereitetes Wasser über eine Pumpe 9 mit einer Wasserleitung 10 in Verbindung. Die Abflüsse der Bordküche 1 der Toilette 2 und des Waschbeckens 3 sind über eine Abwasserleitung 11 mit einem Abwassertank 12 verbunden. Dabei ist erfindungsgemäß eine Einrichtung 13 zur Wasseraufbereitung vorgesehen, die über eine Saugleitung 14, eine Pumpe 15 und eine Druckleitung 16 mit dem Tank 8 verbunden ist. Die Tanks 5,8 und 12 stehen mit außenbords befindlichen verschließbaren Füllstutzen 17,18,19 in Verbindung. Eine Leitung 20 verbindet den Abwassertank 12 mit einem weiteren Stutzen 21. Die Einrichtung 13 besteht im Prinzip aus mehreren Stufen, in denen das Abwasser mehreren Aufbereitungsmaßnahmen unterzogen wird.

Vor dem Start eines mit dieser Anordnung ausgestatteten Flugzeuges werden der Trinkwassertank 5 und der Tank 8 mit Trinkwasser gefüllt. Der Abwassertank 12 wird über den Stutzen 21 entleert und kann danach durch über den Stutzen 19 eingeleitetes Wasser ausgespült werden. Während des Fluges werden die Wasserhähne 4, wovon hier nur einer gezeigt ist, mittels der Pumpe 9 über die Leitung 10 mit aufbereitetem Wasser versorgt. In ähnlicher Weise gelangt Trinkwasser über die Leitung 7 zu den nicht gezeigten Entnahmestellen der Bordküche 1. Sobald sich im Abwasserbehälter 12 von den vorgenannten Einheiten ankommendes Abwasser befindet, setzt innerhalb der Einrichtung 13 der Wasseraufbereitungsprozeß ein. Das hierbei entstehende Produkt wird über die Leitung 16 als aufbereitetes Wasser in den Vorratstank 8 gepumpt. Hier steht es für die vorgenannten Entnahmestellen zur Verfügung. Hinsichtlich des an Bord aufbereiteten Wassers besteht also ein zwischen dem Tank 8, den genannten Entnahmestellen und dem Tank 12 mit der Einrichtung 13 gebildeter Kreislauf. Wobei die hier zirkulierende Wassermenge infolge des Zulaufs aus der Bordküche 1 langsam anwächst. Die Aufnahme einer von Anfang an ausreichend bemessenen Wassermenge zur Versorgung der Entnahmestellen, die lediglich Brauchwasser erhalten, wie bisher, ist also nicht mehr erforderlich.

Eine andere, hier nicht gezeigte Ausgestaltung der Anordnung besteht darin, daß die Einrichtung 13 aufgrund einer entsprechenden Auslegung der einzelnen Stufen direkt aus dem anfallenden Abwasser reines Trinkwasser liefert. Dies wirkt sich in doppelter Hinsicht günstig auf das Gesamtgewicht der Anordnung aus, da

- hierdurch der Trinkwassertank 5 entfällt, dessen Funktion vom Vorratstank 8 übernommen wird, ohne daß dieser vergrößert werden muß und
- hierdurch weiterhin eine der beiden Versorgungsleitungen 7 und 10 entfällt, da jetzt nur noch Wasser von einer Qualität, nämlich Trinkwasserqualität, geliefert wird.

Ein wesentlicher Vorteil der vorbeschriebenen Ausgestaltungen der Anordnung besteht darin, daß die vor dem Start an Bord zu nehmende Brauchwassermenge im Gegensatz zu uns bekannten Anordnungen sehr gering ist. Hierdurch wird die Möglichkeit eröffnet, anstelle des nicht benötigten Brauchwassers eine höhere Anzahl von Passagieren zu befördern, oder neue, wegen ihres enormen Wasserverbrauchs bisher nicht akzeptable Arten von Verbrauchern, beispielsweise eine Dusche, zuzulassen.

Figur 2 zeigt in einer näheren Darstellung der an den Abwassertank 12 angeschlossenen Einrichtung 13, daß diese mittels einer Leitung 22 an den Abwassertank 12 angeschlossen ist und weiterhin über entsprechende Leitungen 23 und 24 mit dem Vorratstank 8 und einem nicht gezeigten Ozon-Generator in Verbindung steht. Die Einrichtung 13 ist derart aufgebaut, daß das durch die Leitung 22 eintretende Wasser nacheinander folgende Einheiten durchläuft, einen mechanischen Filter 25, eine Pumpe 26, einen Kohlefilter 27 bekannter Art mit eingelagerter Aktivkohle, eine Ozon-Stufe 28, ein Osmose-Stufe 29 und eine Desinfizierstufe 30. Weiter zeigt das Bild, daß über die Leitung 24 Ozon auch in den Abwassertank 12 geleitet wird. Dabei übernimmt der Abwasserbehälter 12 die Funktion einer ersten Ozon-Stufe, so daß es sich bei der Stufe 28 bereits um die zweite Ozon-Stufe handelt. Die Art der einzelnen Funktionseinheiten sowie deren Abfolge im Zuge des Wasserdurchlaufs können, je nach Erfordernis, auch anders als in diesem Beispiel gezeigt, festgelegt werden. Die mittels der genannten Einheiten erzielten Wirkungen sind auf dem Gebiet der Wasseraufbereitung an sich bekannt, sollen hier jedoch kurz genannt werden.

Mechanische Filter dienen im wesentlichen zur Abtrennung fester Schwebestoffe.

Die Wirksamkeit eines Kohlefilters beruht auf den Eigenschaften der Aktivkohle. Aktivkohle zeigt bei der Wasseraufbereitung verschiedene vorteilhafte Wirkungen, so bindet sind im Wasser gelöste Stoffe, adsorbiert in großem Maße Schadstoffe (z.B. Pflanzenschutzmittel und Entspannungsmittel), begünstigt den Abbau besimmter Schadstoffe durch Bakterien und wirkt auf manche Stoffe, z.B. Chlorverbindungen als Katalysator, wodurch diese Schadstoffe aus dem Wasser entfernt werden.

In einer Ozon-Stufe wird das zu behandelnde Wasser mit Ozon in Kontakt gebracht. Dabei werden viele Arten von Mikroorganismen, wie Bakterien und Viren abgetötet. Geschmacksstoffe, Geruchsstoffe sowie andere organische Stoffe, wie z.B. Phenol, werden beseitigt. Durch die Behandlung mit Ozon werden ferner Grundstoffe, wie Eisen, Mangan, Schwefel, aus dem Wasser entfernt;

die Sauerstoffkonzentration des Wassers wird dagegen erhöht.

Bei der Wasseraufbereitung wird in einer Osmose-Stufe der Effekt der sogenannten umgekehrten Osmose genutzt. Dabei wird das Wasser entgegen dem osmotischen Druck durch das Molekulargefüge einer halbdurchlässigen Membran gepreßt, wobei infolge dieses Effektes nur Wasserteilchen die Membran passieren können, so daß sich stromab hinter der Membran reines Wasser sammelt.

Bei nicht ausreichender Ozon-Zufuhr können sich Algen oder andere Ablagerungen in den betreffenden Wasserleitungen bilden. Um dies zu vermeiden, kann man mittels der Desinfizierstufe geringe Mengen eines Desinfektionsmittels, beispielsweise eine Chlorverbindung zusetzen.

Als weitere Maßnahmen im Zuge einer Wasseraufbereitung sind Bestrahlung mit utraviolettem Licht und Verdampfung mit anschließender Kondensation bekannt. Die Anwendung einer UV-Bestrahlung erfordert einen sehr hohen Aufwand zur Einhaltung der entsprechenden Betriebsbedingungen. Eine Verdampfung mit anschließender Kondensation benötigt sehr hohe Energiemengen.

Aus diesen Gründen kommen diese Verfahren für die vorbeschriebene Anwendung nicht in Betracht.

Gleichwohl ist die Erfindung nicht auf solche Ausgestaltungen beschränkt, die sich aus der Anwendung der beispielhaft angegebenen, bekannten Maßnahmen zur Wasseraufbereitung, insbesondere mittels der Einrichtung 13 ergeben, vielmehr erstreckt sie sich auch auf solche Anordnungen, die unter Anwendung künftiger Verfahren zur Wasseraufbereitung im Rahmen der Ansprüche denkbar sind.

## Ansprüche

1. Anordnung zur Wasserversorgung, insbesondere an Bord eines Flugzeuges, woran Wasserentnahmestellen angeschlossen sind, wie Waschräume und Bordküchen, mit einem Trinkwassertank und einem Abwassertank, dadurch **gekennzeichnet,** daß der Abwassertank (12), mit einer Einrichtung (13) zur Aufbereitung des Abwassers in an sich bekannter Weise in Verbindung steht, die aufbereitetes Wasser in einen Vorratstank (8) liefert, wobei mindestens einige der Entnahmestellen (1,2,3,4) derart mit dem Vorratstank (8) und dem Abwassertank (12) verbunden sind, daß die aufbereitetes Wasser führenden Leitungen (10,14,16) mit den Abwasser führenden Leitungen (11) im Prinzip einen Kreislauf bilden.

2. Anordnung nach Anspruch 1, **gekennzeichnet,** durch einen Trinkwassertank (5) zur von der Einrichtung (13) unabhängigen Versorgung der Bordküche (1) mit Trinkwasser.

3. Anordnung nach Anspruch 1, dadurch **gekennzeichnet,** daß anstelle des Trinkwassertanks (5) und des Vorratstanks (8) nur ein Tank für aufbereitetes Wasser vorgesehen ist.

4. Anordnung nach einem der Ansprüche 1 bis 3, dadurch **gekennzeichnet,** daß der Abwassertank 12 derart ausgebildet ist, daß er eine Funktion im Rahmen der Wasseraufbereitung übernimmt.

Fig. 1

Fig. 2